# FASCICULE DE BREVET EUROPEEN

(11) **EP 4 594 226 B1**
(45) Date de publication et mention de la délivrance du brevet: **08.07.2026**
(21) Numéro de dépôt: 23754808.6
(22) Date de dépôt: 14.08.2023
(51) Int. Cl.: B65G 47/96, B65G 54/02

(54) **TRIEUR HAUT DÉBIT AVEC DES TRAINS DE RÉCEPTACLES POUR COLIS AIGUILLÉS SUR DEUX CONVOYEURS PARALLÈLES POUR L'INSERTION DE COLIS**
HOCHGESCHWINDIGKEITS-SORTIERANLAGE MIT ZÜGEN VON BEHÄLTERN FÜR PAKETE, DIE AUF ZWEI PARALLELEN FÖRDERBÄNDERN ZUM EINLEGEN VON PAKETEN GEFÜHRT WERDEN
HIGH-SPEED SORTER WITH TRAINS OF RECEPTACLES FOR PARCELS ROUTED ON TWO PARALLEL CONVEYORS FOR INSERTING PARCELS

(30) Priorité: 26.09.2022 FR 2209716
(43) Date de publication de la demande: 06.08.2025
(73) Titulaire: Solystic, 92220 Bagneux (FR)
(72) Inventeur: BEAUGRAND, Wilfrid, 26000 VALENCE (FR)
(74) Mandataire: IP Trust
(86) Numéro de dépôt international: PCT/EP2023/072407
(87) Numéro de publication internationale: WO 2024/068124

(56) Documents cités:
- EP-B1- 2 976 263
- DE-C2- 4 090 308
- US-B1- 6 459 061

## Description

### Domaine technique

L'invention se place dans le domaine de la logistique et plus particulièrement dans le domaine du tri de colis automatisé à débit élevé.

### Technique antérieure

La plupart des installations de tri de colis utilisent aujourd'hui des convoyeurs de tri en boucle équipés de sorties de tri pour trier les colis.

Ce type de convoyeur de tri comprend généralement des réceptacles pour colis aptes non seulement à convoyer les colis selon une certaine direction de convoyage mais également à les trier dans les sorties de tri selon un certain plan de tri prédéterminé.

Certaines installations de tri, comme celle décrite dans le document EP2921431 ou US6459061, utilisent des convoyeurs de tri à rails de guidage qui s'étendent dans la direction de convoyage et sur lesquels se déplace un train de chariots aptes à déplacer les réceptacles pour colis selon la direction de convoyage. Le document US6459061 divulgue en particulier une installation de tri de colis selon le préambule de la revendication 1.

L'utilisation de rails de guidage tubulaires permet notamment de diminuer le rayon de courbure du convoyeur de tri dans les virages, par rapport à des convoyeurs de tri à rails multiples plats, ce qui permet de réduire l'emprise au sol du convoyeur de tri.

Par ailleurs, l'utilisation de ce type de convoyeur de tri impose une vitesse de convoyage constante pour l'ensemble des réceptacles se déplaçant dans la direction de convoyage. Cette vitesse doit donc être adaptée à la fois pour permettre l'évacuation des colis depuis les réceptacles dans les sorties de tri et pour permettre l'insertion des colis sur les réceptacles.

La vitesse de convoyage est donc limitée à la vitesse de convoyage applicable au niveau des dispositifs d'insertion de colis qui ne peuvent supporter des vitesses de convoyage aussi élevées qu'au niveau des zones d'évacuation de colis.

Cette vitesse de convoyage limitée impacte directement le rendement du tri des colis.

Ainsi, pour conserver un rendement de tri suffisant, une solution consiste à doubler, voire tripler, les zones d'insertion en les répartissant en aval des zones de sortie de tri.

Mais cette solution est coûteuse, augmente l'emprise au sol et est contraignante pour le client en termes de gestion des flux et d'implantation dans le bâtiment.

### Exposé de l'invention

L'objectif de l'invention est donc de résoudre les problèmes précités en proposant une installation de tri à la fois compacte et efficace en termes de tri.

A cet effet, l'invention porte sur une installation de tri de colis comprenant un convoyeur de tri en boucle et des sorties de tri réparties le long du convoyeur de tri, ledit convoyeur de tri comprenant des rails parallèles et des réceptacles pour colis reliés entre eux pour former un train de réceptacles conçu pour circuler sur les rails selon une certaine direction de convoyage, chaque réceptacle étant conçus pour trier les colis dans les sorties de tri selon un plan de tri prédéterminé, caractérisée en ce que le convoyeur de tri comprend une pluralité de trains de réceptacles conçus pour circuler les uns après les autres sur les rails dans ladite direction de convoyage, en ce que le convoyeur de tri comprend un convoyeur principal qui se scinde en deux convoyeurs secondaires sur une certaine portion de convoyage et un système d'aiguillage conçu pour aiguiller les trains alternativement vers l'un ou l'autre des convoyeurs secondaires, en ce que l'installation de tri comprend une unité centrale paramétrée pour contrôler la vitesse de déplacement d'un train circulant sur une certaine portion du convoyeur principal de manière à ce que ledit train vienne pousser les trains qui le précèdent dans la direction de convoyage sur le convoyeur principal pour maintenir une certaine vitesse V1 de déplacement de l'ensemble des trains circulant sur le convoyeur principal, ladite unité centrale étant également paramétrée pour contrôler la vitesse de déplacement d'un train sur chacun des convoyeurs secondaires de manière à ce que chacun desdits trains vienne pousser les trains qui le précèdent dans la direction de convoyage sur son convoyeur secondaire pour maintenir une certaine vitesse V2 de l'ensemble des trains circulant sur les convoyeurs secondaires, la vitesse V2 étant égale à la moitié de la vitesse V1.

L'invention consiste à convoyer les colis à vitesse réduite sur les convoyeurs secondaires afin de faciliter l'insertion des colis sur les réceptacles et de convoyer les colis sur le convoyeur principal à vitesse élevée pour garantir un rendement de tri suffisant.

L'idée à la base de l'invention est d'utiliser un système d'aiguillage permettant de répartir alternativement les trains sur chacun des deux convoyeurs secondaires afin d'appliquer une vitesse deux fois moindre que sur le convoyeur principal.

Les réceptacles étant chargés en parallèle sur les deux convoyeurs secondaires, le débit global est la somme des débits des deux convoyeurs.

L'idée de l'invention est également d'utiliser l'inertie de déplacement des trains sur les rails pour imposer une impulsion cinétique de déplacement à un nombre restreint de trains qui viendront pousser les trains qui le précèdent dans la direction de convoyage.

La gestion de contrôle de vitesse de l'ensemble des trains est ainsi grandement facilitée.

L'installation de tri selon l'invention peut également présenter les caractéristiques suivantes :
- le convoyeur de tri comprend des éléments primaires actifs statiques disposés le long des rails et en ce que chaque train comprend des éléments secondaires passifs embarqués, lesdits éléments primaires actifs statiques et lesdits éléments secondaires passifs formant un moteur linéaire, ladite unité centrale étant conçue pour commander les éléments primaires actifs afin de contrôler la vitesse de déplacement desdits trains ;
- au moins un élément primaire actif statique est disposé à une extrémité amont de chaque convoyeur secondaire dans la direction de convoyage et en ce que l'unité centrale est paramétrée pour commander ledit au moins un élément primaire actif statique amont pour accélérer la vitesse de déplacement d'un train de la vitesse V1 jusqu'à une vitesse Vmax puis pour ralentir la vitesse de déplacement dudit train de la vitesse Vmax à la vitesse V2 ;
- au moins un élément primaire actif statique est disposé à une extrémité aval de chaque convoyeur secondaire dans la direction de convoyage et en ce que l'unité centrale est paramétrée pour commander ledit au moins un élément primaire actif statique aval pour accélérer la vitesse de déplacement d'un train de la vitesse V2 jusqu'à une vitesse Vmax puis pour ralentir la vitesse de déplacement dudit train de la vitesse Vmax à la vitesse V1 ;
- plusieurs éléments primaires actifs statiques sont répartis le long du convoyeur principal et en ce que l'unité centrale est paramétrée pour récupérer des données numériques représentatives de la vitesse de l'ensemble des trains sur le convoyeur principal et pour commander en retour lesdits éléments primaires actifs statiques répartis le long du convoyeur principal afin de contrôler la vitesse de déplacement de plusieurs trains sur le convoyeur principal pour les déplacer à vitesse V1 ;
- les éléments primaires actifs statiques s'étendent sous et le long des rails du convoyeur de tri de sorte à laisser un espace libre entre les rails afin de permettre l'évacuation d'un colis par gravité entre les rails ;
- chaque réceptacle comprend un moyen de déchargement de colis et des équipements embarqués dont un actionneur conçu pour contrôler ledit moyen de déchargement de colis pour permettre le déchargement d'un colis depuis le réceptacle dans une sortie de tri ;
- les équipements embarqués comprennent une électronique conçue pour déterminer la position du train sur le convoyeur de tri par rapport aux sorties de tri et déterminer l'ordonnancement des réceptacles du train dans la direction de convoyage, en ce que l'unité centrale est conçue pour communiquer à l'électronique embarquée la sortie de tri dans laquelle un colis doit être trié et en ce que l'électronique embarquée est paramétrée pour commander en retour l'actionneur d'un réceptacle pour décharger ledit colis dans ladite sortie de tri appropriée ;
- l'installation de tri est équipée d'antennes de communication à courte distance réparties le long du convoyeur de tri, au moins une antenne couvrant une zone de chargement de colis et une autre antenne couvrant une zone de déchargement de colis, chaque antenne étant conçue pour permettre la communication entre l'unité centrale et l'électronique embarquée dans les réceptacles dans la zone qu'elle couvre ;
- chaque train comprend une batterie conçue pour alimenter les équipements embarqués des réceptacles d'un même train, ladite batterie étant chargée électriquement par dynamo.

### Brève description des dessins

La présente invention sera mieux comprise et d'autres avantages apparaîtront à la lecture de la description détaillée du mode de réalisation pris à titre d'exemple nullement limitatif et illustré par les dessins annexés, dans lesquels :
[Fig.1] - La [Fig.1] est une représentation schématique d'une installation de tri selon l'invention ;
[Fig.2] - la [Fig.2] est une représentation schématique d'un système d'aiguillage selon l'invention ,
[Fig.3] - La [Fig.3] est une représentation schématique d'un train de réceptacles sur le convoyeur de tri selon l'invention.

### Description détaillée de l'invention

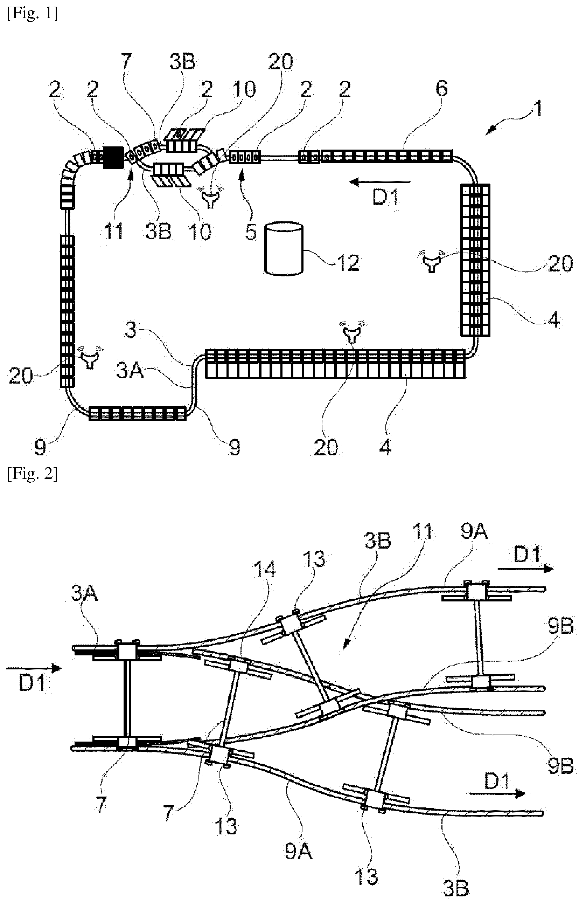

L'installation de tri 1 de colis 2 selon l'invention, également appelée trieur, représentée sur la [Fig.1] est particulièrement bien adaptée pour trier des colis hétérogènes, et notamment des colis de type PPI (Petit Paquet International) typiques du e-commerce, à débit élevé tout ayant une emprise au sol réduite.

L'installation de tri 1 de colis 2 selon l'invention comprend notamment un convoyeur de tri 3 en boucle et des sorties de tri 4 réparties le long du convoyeur de tri 3.

Le convoyeur de tri 3 est ici équipé de trains 5 qui se suivent selon une certaine direction de convoyage D1, comme représenté sur la [Fig.1]. Chaque train 5 comprend une succession de réceptacles 6 pour colis 2, ici par exemple montés sur des chariots 7.

Les réceptacles sont conçus d'une part pour convoyer les colis 2 dans la direction de convoyage D1 et d'autre part pour trier les colis 2 selon un plan de tri prédéterminé dans les sorties de tri 4.

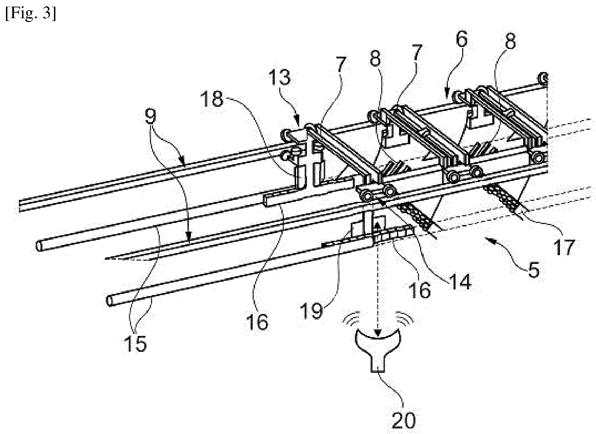

Les réceptacles 6 pour colis 2 se présentent par exemple sous la forme de godets, visibles sur la [Fig.3], munis d'une trappe d'évacuation 8 permettant l'évacuation des colis 2 dans les sorties de tri 4 sous le convoyeur de tri 3 et sous l'effet de la gravité.

Les réceptacles 6 pour colis 2 pourront également se présenter sous la forme de plateaux basculants ou à courroie motorisée pour éjecter les colis 2 sur le côté du convoyeur de tri 3 dans les sorties de tri 4.

Chaque train 5 de réceptacles 6 comprendra préférentiellement le même type de réceptacles 6, à godet ou à plateau, afin d'optimiser l'agencement des sorties de tri 3 pour un même train 5 de réceptacles 6.

Le convoyeur de tri 3 selon l'invention comprend quant à lui deux rails 9 parallèles qui s'étendent dans la direction de convoyage D1.

Plus particulièrement, le convoyeur de tri 3 comprend un convoyeur principal 3A qui se scinde en deux convoyeurs secondaires 3B sur une certaine portion de convoyage.

Les sorties de tri 4 seront par exemple répartis le long du convoyeur principal 3A dans une zone de déchargement des colis.

Les convoyeurs secondaires 3B seront quant à eux équipés de dispositifs d'insertion 10 de colis dans une zone de chargement de colis.

On comprend donc que le convoyeur principal 3A et les convoyeurs secondaires 3B présentent eux aussi chacun deux rails 9 parallèles qui s'étendent dans la direction de convoyage D1.

Le convoyeur de tri 3 est avantageusement équipé d'un système d'aiguillage 11 conçu pour aiguiller les trains 5 vers l'un ou l'autre des convoyeurs secondaires 3B.

Un autre système d'aiguillage 11 du même type pourra également être prévu en aval dans la direction de convoyage D1 afin d'aiguiller les trains 5 vers le convoyeur principal 3A depuis l'un ou l'autre des convoyeurs secondaires 3B.

A titre d'exemples nullement limitatifs, le système d'aiguillage 11 pourra être actif avec des lames d'aiguilles mobiles contrôlées par une unité centrale 12 selon l'invention de manière à aiguiller les trains 5 sur l'un ou l'autre des convoyeurs secondaires 3B, ou bien passif comme représenté sur la [Fig.2], c'est-à-dire sans que les rails n'aient de partie mobile.

Dans le cas d'un aiguillage passif, chaque chariot 7 selon l'invention comprend un élément de couplage 13 conçu pour être emmanché sur un rail 9 du convoyeur principal 3A qui sert de rail directeur 9A pour guider le chariot 7 dans la direction de convoyage et un élément de stabilisation 14 agencé pour venir en appui sur l'autre rail 9 du convoyeur principal 3A qui sert de rail suiveur 9B pour supporter verticalement le chariot 7 dans son déplacement selon la direction de convoyage D1.

Aussi, l'utilisation d'aiguillage passif nécessite d'emmancher les trains 5 de réceptacles 6 successifs de manière alternative sur les rails 9 du convoyeur principal 3A de sorte que les convoyeurs secondaires 3B reçoivent un train 5 de réceptacles 6 sur deux.

Grâce à cet aiguillage passif, le convoyeur de tri 3 peut aiguiller les trains 5 de réceptacles 6 vers l'un ou l'autre des convoyeurs secondaires 3B de manière passive, c'est-à-dire que les trains 5 se déplacent dans la direction de convoyage D1 en empruntant toujours le même convoyeur secondaire 3B.

L'aiguillage passif à l'avantage par rapport à l'aiguillage actif de ne pas déplacer de portions de rails 9 dont la masse est très importante et dont le déplacement devrait être effectué très rapidement compte tenu de la vitesse des trains 5 et de leur proximité.

A titre d'exemple nullement limitatif, les dispositifs d'insertion 10 sont ici agencés pour venir à fleur des convoyeurs secondaires 3B de sorte que les colis 2 sont injectés transversalement à la direction de convoyage D1 par simple glissement ou par entraînement par courroies motorisées.

Les réceptacles 6 pour colis 2 peuvent également présenter avantageusement une surface de pose du colis 2 qui s'étend sensiblement à la même hauteur que les rails 9 du convoyeur de tri 3.

Cela permet notamment de limiter le rapprochement entre les colis et les réceptacles en montée, de réduire les contraintes sur les rails 9 et les chariots 7 et de faciliter l'évacuation des colis 2, que ce soit sous le convoyeur de tri 3 ou sur le côté du convoyeur de tri 3.

Grâce à l'installation de tri 1 selon l'invention, il est possible d'optimiser la cadence de tri en convoyant les colis 2 à vitesse élevée sur le convoyeur principal 3A et en circulant sur les deux convoyeurs secondaires 3B en parallèle pour maintenir la cadence globale au niveau des dispositifs d'insertion 10 où la vitesse est divisée par 2.

Pour cela, l'unité centrale 12 est paramétrée pour contrôler la vitesse de déplacement des trains 5 de réceptacles 6 pour colis 2 de sorte que chaque train 5 de réceptacles 6 se déplace à une vitesse V1 sur le convoyeur principal 3A et à une vitesse V2 sur les convoyeurs secondaires 3B, la vitesse V2 étant égale à la moitié de la vitesse V1.

La vitesse V1 sera par exemple comprise entre 1,5 et 2m/s (mètre par seconde), de préférence 1,8m/s.

Pour une vitesse nominale de 1,8m/s sur le convoyeur principal 3A, on comprend que la vitesse sur les convoyeurs secondaires 3B au niveau des dispositifs d'insertion sera de 0.9m/s.

Plus particulièrement, l'invention consiste à contrôler, via l'unité centrale 12 la vitesse de déplacement d'un train 5 circulant sur une certaine portion du convoyeur principal 3A de manière à ce que ledit train 5 vienne pousser les trains 5 qui le précèdent dans la direction de convoyage D1 sur le convoyeur principal 3A pour maintenir une certaine vitesse V1 de déplacement de l'ensemble des trains 5 circulant sur le convoyeur principal 3A.

L'invention consiste également à contrôler via l'unité centrale 12 la vitesse de déplacement d'un train 5 sur chacun des convoyeurs secondaires 3B de manière à ce que chacun desdits trains 5 vienne pousser les trains 5 qui le précèdent dans la direction de convoyage D1 sur son convoyeur secondaire 3B pour maintenir une certaine vitesse V2 de l'ensemble des trains 5 circulant sur les convoyeurs secondaires 3B, la vitesse V2 étant égale à la moitié de la vitesse V1.

Ainsi, lorsqu'un train 5 accélère sous la commande de l'unité centrale 12, ce train 5 pousse les trains 5 qui le précèdent dans la direction de convoyage D1 sur le convoyeur principal 3A ou sur l'un des convoyeurs secondaires 3B pour les déplacer respectivement à vitesse V1 ou V2.

On comprendra que si la force de poussée nécessaire pour déplacer l'ensemble des trains 5 d'une vitesse nulle à la vitesse V1 ou V2 est importante, la force de poussée pour maintenir les trains 5 déjà en déplacement sur le convoyeur de tri 3 à vitesse constante est réduite du fait de la forte inertie des trains 5 en déplacement sur le convoyeur de tri 3.

Plus particulièrement, l'installation de tri 1 selon l'invention pourra comprendre des éléments primaires actifs 15 statiques et des éléments secondaires passifs 16 de manière à former un moteur linéaire.

Les éléments primaires actifs 15 statiques seront par exemple disposés sous et le long des rails 9 du convoyeur de tri 3 de sorte à laisser un espace libre entre les rails 9 permettant l'évacuation d'un colis 2 par gravité entre les rails 9.

De son côté, chaque train 5 comprendra au moins un élément secondaire passif 16 embarqué.

L'unité centrale 12 selon l'invention est donc conçue pour commander les éléments primaires actifs 15 afin de contrôler la vitesse de déplacement de chaque train 5.

Le moteur linéaire pourra être du type synchrone avec des aimants permanents embarqués sur les trains ou du type asynchrone à induction avec des noyaux métalliques embarqués, ou bien encore de type synchrone à commutation de flux avec des aimants permanents intégrés aux bobinages statiques.

Sans restreindre la portée de l'invention et pour mieux équilibrer la poussée et la répartition de puissance, il est préférable mais non obligatoire de motoriser les trains 5 de chaque côté des rails 9.

Plus précisément, au moins un élément primaire actif 15 statique pourra être disposé à une extrémité amont de chaque convoyeur secondaire dans la direction de convoyage D1. Dans ce cas, l'unité centrale 12 sera paramétrée pour commander ledit au moins un élément primaire actif 15 statique amont pour accélérer la vitesse de déplacement d'un train 5 de la vitesse V1 jusqu'à une vitesse Vmax puis pour ralentir la vitesse de déplacement de ce train 5 de la vitesse Vmax à la vitesse V2.

Le ralentissement du train 5 pourra quant à lui être effectué par exemple à l'aide du moteur linéaire, ou bien à l'aide de freins installés sur les chariots du train et conçus pour être activés à distance par l'unité centrale 12, ou bien encore à l'aide de freins agencés le long du convoyeur de tri 3, notamment sur les convoyeurs secondaires 3B, conçus pour freiner automatiquement les trains 5 lorsqu'ils passent sur le système d'aiguillage 11.

Au moins un autre élément primaire actif statique 15 pourra être disposé à une extrémité aval de chaque convoyeur secondaire 3B dans la direction de convoyage D1. Dans ce cas là, l'unité centrale 12 sera paramétrée pour commander chaque élément primaire actif statique 15 aval pour accélérer la vitesse de déplacement d'un train 5 de la vitesse V2 jusqu'à une vitesse Vmax puis pour ralentir la vitesse de déplacement du train de la vitesse Vmax à la vitesse V1.

Aussi, afin de maintenir la vitesse de déplacement de l'ensemble train 5 sur le convoyeur principal à vitesse V1, plusieurs éléments primaires actifs 15 statiques pourront être répartis le long du convoyeur principal 3A pour donner des impulsion à plusieurs trains à des endroits différents du convoyeur principal. L'unité centrale 12 sera alors paramétrée pour récupérer des données numériques représentatives de la vitesse d'un seul ou de l'ensemble des trains 5 sur le convoyeur principal 3A et pour commander en retour lesdits éléments primaires actifs 15 statiques répartis le long du convoyeur principal 3A.

La vitesse Vmax indiquée ci-avant sera calculée notamment en fonction de la longueur des trains 5 de réceptacles et de la longueur du système d'aiguillage 11.

A titre d'exemple, les vitesses qui sont mises en jeu pour réaliser une cinétique d'accélération et de ralentissement des trains 5 selon l'invention dans le cas d'un rayon de courbure minimal des déviations de 2 mètres sont les suivantes :

L'accélération se fait à 4m/s² pendant 175ms et s'étend sur 376mm pour atteindre Vmax à 2,5m/s.

Vmax est alors maintenue pendant 1,5s et s'étend sur 3.75m.

Enfin, le freinage à 0.9m/s dure quant à lui 400ms et s'étend sur 680mm.

On comprendra ainsi que les accélérations et ralentissements des trains au niveau du système d'aiguillage permettent de créer un espace entre deux trains qui se suivent dans la direction de convoyage de manière à pouvoir les aiguiller alternativement sur l'un ou l'autre des convoyeurs secondaires 3B sans qu'ils n'entrent en collision.

On comprendra également que la longueur de l'ensemble des trains 5 est avantageusement inférieure à la longueur du convoyeur de tri 3 de sorte à conserver l'espace nécessaire entre deux trains 5 au moment du passage du système d'aiguillage 11.

Enfin, mise à part l'accélération et le ralentissement des trains 5 pour démarrer ou arrêter les trains 5 sur le convoyeur de tri ainsi que pour les déviations au niveau du ou des systèmes d'aiguillage 11, les vitesses des trains 5 sur le convoyeur principal 3A et sur les convoyeurs secondaires 3B sont constantes.

Pour l'arrêt et le démarrage, l'unité centrale 12 sera paramétrée pour diminuer et augmenter progressivement la vitesse des trains 5.

Pour cela l'unité centrale 12 est paramétrée pour recevoir des données numériques représentatives de la vitesse et de la position des trains 5 sur le convoyeur de tri 3 et pour calculer en retour en temps réel une vitesse évolutive à appliquer pour les trains 5.

Ainsi, malgré les vitesses qui évoluent, les trains 5 restent au contact les uns aux autres sur le convoyeur principal 3A et les convoyeurs secondaires 3B.

Le même décalage entre les trains 5 avant déviation sur les convoyeurs secondaires 3B et avant regroupement sur le convoyeur principal 3A sera conservé, ce qui nécessite de faire varier la vitesse maximale Vmax appliquée lors du convoyage des trains 5 sur le système d'aiguillage 11 proportionnellement aux vitesses V1 et V2.

De manière avantageuse et sans restreindre la portée de l'invention, chaque réceptacle 6 d'un même train 5 pourra être rendu autonome pour le chargement et le déchargement de colis 2 grâce à la présence d'équipements embarqués.

Chaque réceptacle 6 comprendra donc plusieurs équipements embarqués dont un actionneur 17 conçu pour actionner un moyen de déchargement de colis et permettre le déchargement d'un colis 2 depuis le réceptacle 6 dans une sortie de tri 4.

Plus précisément, dans le cas d'une utilisation de réceptacle 6 en forme de godet, le moyen de déchargement de colis sera représenté par la trappe 8 d'évacuation, l'actionneur 17 pourra par exemple déclencher un ressort de rappel pour une ouverture rapide de la trappe 8.

La trappe 8 en position ouverte permettra également d'accompagner le colis 2 lors de son déchargement par gravité dans la sortie de tri 4 appropriée.

La fermeture de la trappe 8 d'évacuation se fera quant à elle par exemple à l'aide d'une came mécanique présente sur le convoyeur de tri 3.

D'autres équipements selon invention pourront être embarqués sur chaque train 5 telle qu'une électronique 19 conçue pour déterminer la position du train 5 sur le convoyeur de tri 3 par rapport aux sorties de tri 4 et pour déterminer l'ordonnancement des réceptacles 6 du train 5 dans la direction de convoyage D1.

Pour déterminer la position d'un train 5 sur le convoyeur de tri 3, l'électronique embarquée 19 de chaque train 5 est ici paramétrée pour détecter son passage sur une certaine portion du convoyeur de tri 3, dans la direction de convoyage D1, par exemple via un capteur magnétique.

La position de chaque réceptacle 6 du train sera déduite de celle du train 5. Chaque réceptacle 6 sera par ailleurs repéré visuellement pour faciliter l'exploitation et la maintenance.

L'électronique 19 sera également conçue pour recevoir une donnée indicatrice d'une sortie de tri 4 dans laquelle doit être trié un colis 2 du train 5 de réceptacles 6 et pour commander en retour l'actionneur 17 du réceptacle 6 correspondant pour décharger ledit colis dans ladite sortie de tri appropriée.

L'électronique 19 est ici conçue pour dialoguer avec l'unité centrale 12, non seulement au moment du chargement des colis 2 au niveau des dispositifs d'insertion 10, mais également avant toute zone de déchargement puisque la sortie de tri 4 du colis 2 à trier peut être connue tardivement.

L'électronique 19 est également conçue pour acquérir certaines données transmises par des capteurs répartis le long du convoyeur de tri 3, notamment pour se repérer avant d'entrer dans une zone de déchargement de colis 2 et avant la zone de chargement sur les convoyeurs secondaires 3B.

L'électronique 19 pourra assurer d'autres tâches telles que :
· la surveillance du niveau de chargement de la batterie,
· la signalisation de défauts de fonctionnement des équipements,
· le reporting (défauts, statistiques d'utilisation...),
· la configuration à l'installation (type de réceptacles, nombres de réceptacles par train,...).

L'installation de tri 1 pourra également être équipée d'antennes 20 de communication à courte distance réparties le long du convoyeur de tri 3.

Plus particulièrement, l'installation de tri 1 selon l'invention comprendra par exemple, au moins une antenne 20 couvrant une zone de chargement de colis et une autre antenne couvrant une zone de déchargement de colis, chaque antenne étant conçue pour permettre la communication entre l'unité centrale et l'électronique 19 embarquée dans les réceptacles 6 dans la zone qu'elle couvre, notamment pour que l'unité centrale 12 communique la donnée indicatrice d'une sortie de tri 4 à l'électronique 19 embarquée.

Sans restreindre la portée de l'invention, chaque train 5 selon l'invention pourra également comprendre une batterie 18 conçue pour alimenter les équipements embarqués des réceptacles 6 d'un même train 5.

La batterie 18 pourra par exemple être chargée électriquement par dynamo entrainée par des galets du train 5 roulant sur les rails 9 du convoyeur de tri 3.

Une batterie 24V sera ici suffisante pour alimenter les équipements d'un train 5 complet.

Grâce à l'utilisation d'une batterie 18 chaque réceptacle 6 est autonome électriquement dans le contrôle de ses équipements.

## Revendications

1. Installation de tri (1) de colis (2) comprenant un convoyeur de tri (3) en boucle et des sorties de tri (4) réparties le long du convoyeur de tri, ledit convoyeur de tri comprenant des rails (9) parallèles et des réceptacles pour colis reliés entre eux pour former un train (5) de réceptacles conçu pour circuler sur les rails selon une certaine direction de convoyage (D1), chaque réceptacle étant conçus pour trier les colis dans les sorties de tri selon un plan de tri prédéterminé, le convoyeur de tri comprenant une pluralité de trains de réceptacles conçus pour circuler les uns après les autres sur les rails dans ladite direction de convoyage le convoyeur de tri comprenant un convoyeur principal (3A) qui se scinde en deux convoyeurs secondaires (3B) sur une certaine portion de convoyage et un système d'aiguillage (11) conçu pour aiguiller les trains alternativement vers l'un ou l'autre des convoyeurs secondaires, **caractérisée en ce que** l'installation de tri comprend une unité centrale (12) paramétrée pour contrôler la vitesse de déplacement d'un train circulant sur une certaine portion du convoyeur principal de manière à ce que ledit train vienne pousser les trains qui le précèdent dans la direction de convoyage sur le convoyeur principal pour maintenir une certaine vitesse V1 de déplacement de l'ensemble des trains circulant sur le convoyeur principal, ladite unité centrale étant également paramétrée pour contrôler la vitesse de déplacement d'un train sur chacun des convoyeurs secondaires de manière à ce que chacun desdits trains vienne pousser les trains qui le précèdent dans la direction de convoyage sur son convoyeur secondaire pour maintenir une certaine vitesse V2 de l'ensemble des trains circulant sur les convoyeurs secondaires, la vitesse V2 étant égale à la moitié de la vitesse V1.

2. Installation de tri de colis selon la revendication 1, **caractérisée en ce que** le convoyeur de tri comprend des éléments primaires actifs (15) statiques disposés le long des rails et **en ce que** chaque train comprend des éléments secondaires passifs (16) embarqués, lesdits éléments primaires actifs statiques et lesdits éléments secondaires passifs formant un moteur linéaire, ladite unité centrale étant conçue pour commander les éléments primaires actifs afin de contrôler la vitesse de déplacement desdits trains.

3. Installation de tri de colis selon la revendication 2, **caractérisée en ce qu'**au moins un élément primaire actif statique est disposé à une extrémité amont de chaque convoyeur secondaire dans la direction de convoyage et en ce l'unité centrale est paramétrée pour commander ledit au moins un élément primaire actif statique amont pour accélérer la vitesse de déplacement d'un train de la vitesse V1 jusqu'à une vitesse Vmax puis pour ralentir la vitesse de déplacement dudit train de la vitesse Vmax à la vitesse V2.

4. Installation de tri de colis selon la revendication 2 ou 3, **caractérisée en ce qu'**au moins un élément primaire actif statique est disposé à une extrémité aval de chaque convoyeur secondaire dans la direction de convoyage et **en ce que** l'unité centrale est paramétrée pour commander ledit au moins un élément primaire actif statique aval pour accélérer la vitesse de déplacement d'un train de la vitesse V2 jusqu'à une vitesse Vmax puis pour ralentir la vitesse de déplacement dudit train de la vitesse Vmax à la vitesse V1.

5. Installation de tri de colis selon l'une quelconque des revendications 2 à 4, **caractérisée en ce que** plusieurs éléments primaires actifs statiques sont répartis le long du convoyeur principal et **en ce que** l'unité centrale est paramétrée pour récupérer des données numériques représentatives de la vitesse de l'ensemble des trains sur le convoyeur principal et pour commander en retour lesdits éléments primaires actifs statiques répartis le long du convoyeur principal afin de contrôler la vitesse de déplacement de plusieurs trains sur le convoyeur principal pour les déplacer à vitesse V1.

6. Installation de tri de colis selon l'une quelconque des revendications 2 à 5, **caractérisée en ce que** les éléments primaires actifs statiques s'étendent sous et le long des rails du convoyeur de tri de sorte à laisser un espace libre entre les rails afin de permettre l'évacuation d'un colis par gravité entre les rails.

7. Installation de tri de colis selon l'une quelconque des revendications précédentes, **caractérisée en ce que** chaque réceptacle comprend un moyen de déchargement de colis et des équipements embarqués dont un actionneur (17) conçu pour contrôler ledit moyen de déchargement de colis pour permettre le déchargement d'un colis depuis le réceptacle dans une sortie de tri.

8. Installation de tri de colis selon la revendication 7, **caractérisée en ce que** les équipements embarqués comprennent une électronique conçue pour déterminer la position du train sur le convoyeur de tri par rapport aux sorties de tri et déterminer l'ordonnancement des réceptacles du train dans la direction de convoyage, **en ce que** l'unité centrale est conçue pour communiquer à l'électronique embarquée la sortie de tri dans laquelle un colis doit être trié et **en ce que** l'électronique embarquée est paramétrée pour commander en retour l'actionneur d'un réceptacle pour décharger ledit colis dans ladite sortie de tri appropriée.

9. Installation de tri de colis selon l'une quelconque des revendications 7 à 8, **caractérisé en ce que** l'installation de tri est équipée d'antennes (20) de communication à courte distance réparties le long du convoyeur de tri, au moins une antenne couvrant une zone de chargement de colis et une autre antenne couvrant une zone de déchargement de colis, chaque antenne étant conçue pour permettre la communication entre l'unité centrale et l'électronique embarquée dans les réceptacles dans la zone qu'elle couvre.

10. Installation de tri de colis selon l'une quelconque des revendications 7 à 9, **caractérisé en ce que** chaque train comprend une batterie (18) conçue pour alimenter les équipements embarqués des réceptacles d'un même train, ladite batterie étant chargée électriquement par dynamo.

## Patentansprüche

1. Sortieranlage (1) für Pakete (2), umfassend einen Sortierförderer (3) in Schleifenform und Sortierauslässe (4), die entlang des Sortierförderers verteilt sind, der Sortierförderer umfassend parallele Schienen (9) und Behälter für Pakete, die miteinander verbunden sind, zum Ausbilden eines Zugs (5) von Behältern, der zum Zirkulieren auf den Schienen entlang einer gewissen Förderrichtung (D1) konzipiert ist, wobei jeder Behälter zum Sortieren der Pakete in die Sortierauslässe nach einem vorbestimmten Sortierplan konzipiert ist, der Sortierförderer umfassend eine Vielzahl von Behälterzügen, die zum nacheinander Zirkulieren auf den Schienen in der Förderrichtung konzipiert sind, der Sortierförderer umfassend einen Hauptförderer (3A), der sich in zwei Sekundärförderer (3B) auf einem gewissen Förderabschnitt teilt, und ein Weichensystem (11), das zum Leiten der Züge abwechselnd zu einem oder dem anderen der Sekundärförderer konzipiert ist, **dadurch gekennzeichnet, dass** die Sortieranlage eine Zentraleinheit (12) umfasst, die zum Kontrollieren der Bewegungsgeschwindigkeit eines Zuges parametriert ist, der auf einem gewissen Abschnitt des Hauptförderers zirkuliert, sodass der Zug die Züge schiebt, die ihm in der Förderrichtung auf dem Hauptförderer vorangehen, zum Aufrechterhalten einer gewissen Bewegungsgeschwindigkeit V1 der Gesamtheit von Zügen, die auf dem Hauptförderer zirkulieren, wobei die Zentraleinheit auch zum Kontrollieren der Bewegungsgeschwindigkeit eines Zuges auf jedem der Sekundärförderer, sodass jeder der Züge die Züge schiebt, die ihm in der Förderrichtung auf seinem Sekundärförderer vorangehen, zum Aufrechterhalten einer gewissen Geschwindigkeit V2 der Gesamtheit von Zügen, die auf den Sekundärförderern zirkulieren, parametriert ist, wobei die Geschwindigkeit V2 gleich der Hälfte der Geschwindigkeit V1 ist.

2. Sortieranlage für Pakete nach Anspruch 1,
**dadurch gekennzeichnet, dass** der Sortierförderer statische aktive Primärelemente (15) umfasst, die entlang der Schienen angeordnet sind, und **dadurch, dass** jeder Zug passive Sekundärelemente (16) an Bord umfasst, wobei die statischen aktiven Primärelemente und die passiven Sekundärelemente einen Linearmotor ausbilden, wobei die Zentraleinheit zum Steuern der aktiven Primärelemente, um die Bewegungsgeschwindigkeit der Züge zu kontrollieren, konzipiert ist.

3. Sortieranlage für Pakete nach Anspruch 2,
**dadurch gekennzeichnet, dass** mindestens ein statisches aktives Primärelement an einem stromaufwärtigen Ende jedes Sekundärförderers in der Förderrichtung angeordnet ist und **dadurch, dass** die Zentraleinheit zum Steuern des mindestens einen stromaufwärtigen statischen aktiven Primärelements zum Beschleunigen der Bewegungsgeschwindigkeit eines Zuges von der Geschwindigkeit V1 bis zu einer Geschwindigkeit Vmax, dann zum Verlangsamen der Bewegungsgeschwindigkeit des Zuges von der Geschwindigkeit Vmax auf die Geschwindigkeit V2 parametriert ist.

4. Sortieranlage für Pakete nach Anspruch 2 oder 3,
**dadurch gekennzeichnet, dass** mindestens ein statisches aktives Primärelement an einem stromabwärtigen Ende jedes Sekundärförderers in der Förderrichtung angeordnet ist und **dadurch, dass** die Zentraleinheit zum Steuern des mindestens einen stromabwärtigen statischen aktiven Primärelements zum Beschleunigen der Bewegungsgeschwindigkeit eines Zuges von der Geschwindigkeit V2 bis zu einer Geschwindigkeit Vmax, dann zum Verlangsamen der Bewegungsgeschwindigkeit des Zuges von der Geschwindigkeit Vmax auf die Geschwindigkeit V1 parametriert ist.

5. Sortieranlage für Pakete nach einem der Ansprüche 2 bis 4,
**dadurch gekennzeichnet, dass** mehrere statische aktive Primärelemente entlang des Hauptförderers verteilt sind und **dadurch, dass** die Zentraleinheit zum Wiederverwenden von digitalen Daten, die die Geschwindigkeit der Gesamtheit der Züge auf dem Hauptförderer abbilden, und im Gegenzug zum Steuern der statischen aktiven Primärelemente, die entlang des Hauptförderers verteilt sind, um die Bewegungsgeschwindigkeit mehrerer Züge auf dem Hauptförderer zu kontrollieren, zum Bewegen dieser mit der Geschwindigkeit V1, parametriert ist.

6. Sortieranlage für Pakete nach einem der Ansprüche 2 bis 5,
**dadurch gekennzeichnet, dass** die statischen aktiven Primärelemente sich unter und entlang der Schienen des Sortierförderers erstrecken, sodass ein freier Raum zwischen den Schienen verbleibt, um den Abtransport eines Pakets durch Schwerkraft zwischen den Schienen zu ermöglichen.

7. Sortieranlage für Pakete nach einem der vorstehenden Ansprüche, **dadurch gekennzeichnet, dass** jeder Behälter ein Paketentlademittel und bordeigene Ausrüstungen umfasst, darunter einen Aktuator (17), der zum Steuern des Paketentlademittels konzipiert ist, zum Ermöglichen des Entladens eines Pakets aus dem Behälter in einen Sortierauslass.

8. Sortieranlage für Pakete nach Anspruch 7, **dadurch gekennzeichnet, dass** die bordeigenen Ausrüstungen eine elektronische Einrichtung umfassen, die zum Bestimmen der Position des Zuges auf dem Sortierförderer in Bezug auf die Sortierauslässe und zum Bestimmen der Reihung der Behälter des Zuges in der Förderrichtung konzipiert ist, **dadurch, dass** die Zentraleinheit zum Übermitteln, an die bordeigene elektronische Einrichtung, des Sortierauslasses, in den ein Paket zu sortieren ist, konzipiert ist, und **dadurch, dass** die bordeigene elektronische Einrichtung im Gegenzug zum Steuern des Stellglieds eines Behälters zum Entladen des Pakets in den geeigneten Sortierauslass parametriert ist.

9. Sortieranlage für Pakete nach einem der Ansprüche 7 bis 8,
**dadurch gekennzeichnet, dass** die Sortieranlage mit Antennen (20) für eine Nahbereichskommunikation ausgestattet ist, die entlang des Sortierförderers verteilt sind, wobei mindestens eine Antenne einen Paketbeladungsbereich und eine andere Antenne einen Paketentladungsbereich abdeckt, wobei jede Antenne zum Ermöglichen der Kommunikation zwischen der Zentraleinheit und der bordeigenen elektronischen Einrichtung in den Behältern in dem Bereich, die sie abdeckt, konzipiert ist.

10. Sortieranlage für Pakete nach einem der Ansprüche 7 bis 9,
**dadurch gekennzeichnet, dass** jeder Zug eine Batterie (18) umfasst, die zum Versorgen der bordeigenen Ausrüstungen der Behälter eines selben Zuges konzipiert ist, wobei die Batterie elektrisch durch einen Dynamo geladen wird.

## Claims

1. Installation (1) for sorting packages (2), the installation comprising a looped sorting conveyor (3) and sorting outlets (4) distributed along the sorting conveyor, said sorting conveyor comprising parallel rails (9) and receptacles for packages connected together to form a train (5) of receptacles which is designed to travel on the rails in a certain conveying direction (D1), each receptacle being designed to sort the packages into the sorting outlets according to a predetermined sorting plan, the sorting conveyor comprising a plurality of trains of receptacles which are designed to travel on the rails in said conveying direction, one after the other, the sorting conveyor comprising a main conveyor (3A) which splits into two secondary conveyors (3B) over a certain conveying portion and comprising a switching system (11) designed to switch the trains alternatingly toward one or the other of the secondary conveyors, **characterized in that** the sorting installation comprises a central unit (12) configured to control the movement speed of a train traveling on a certain portion of the main conveyor such that said train pushes the trains preceding it in the conveying direction on the main conveyor in order to maintain a certain movement speed V1 of all the trains traveling on the main conveyor, said central unit also being configured to control the movement speed of a train on each of the secondary conveyors such that each of said trains pushes the trains preceding it in the conveying direction on its secondary conveyor in order to maintain a certain speed V2 of all the trains traveling on the secondary conveyors, the speed V2 being equal to half the speed V1.

2. Package sorting installation according to claim 1, **characterized in that** the sorting conveyor comprises static active primary elements (15) arranged along the rails, and **in that** each train comprises on-board passive secondary elements (16), said static active primary elements and said passive secondary elements forming a linear motor, said central unit being designed to control the active primary elements so as to control the movement speed of said trains.

3. Package sorting installation according to claim 2, **characterized in that** at least one static active primary element is arranged at an upstream end of each secondary conveyor in the conveying direction, and **in that** the central unit is configured to control said at least one upstream static active primary element to accelerate the movement speed of a train from the speed V1 up to a speed Vmax and then to slow down the movement speed of said train from the speed Vmax to the speed V2.

4. Package sorting installation according to claim 2 or 3,
**characterized in that** at least one static active primary element is arranged at a downstream end of each secondary conveyor in the conveying direction, and **in that** the central unit is configured to control said at least one downstream static active primary element to accelerate the movement speed of a train from the speed V2 up to a speed Vmax and then to slow down the movement speed of said train from the speed Vmax to the speed V1.

5. Package sorting installation according to any one of claims 2 to 4, **characterized in that** a plurality of static active primary elements are distributed along the main conveyor, and **in that** the central unit is configured to collect digital data representative of the speed of all the trains on the main conveyor and to feedback control said static active primary elements distributed along the main conveyor so as to control the movement speed of a plurality of trains on the main conveyor in order to move them at the speed V1.

6. Package sorting installation according to any one of claims 2 to 5, **characterized in that** the static active primary elements extend under and along the rails of the sorting conveyor such as to leave a free space between the rails so to allow a package to be discharged between the rails by means of gravity.

7. Package sorting installation according to any one of the preceding claims, **characterized in that** each receptacle comprises a means for unloading packages and on-board equipment including an actuator (17) designed to control said package unloading means in order to allow a package to be unloaded from the receptacle into a sorting outlet.

8. Package sorting installation according to claim 7, **characterized in that** the on-board equipment comprises electronics designed to determine the position of the train on the sorting conveyor relative to the sorting outlets and to determine the order of the receptacles in the train in the conveying direction, **in that** the central unit is designed to communicate to the on-board electronics the sorting outlet into which a package is to be sorted, and **in that** the on-board electronics are configured to feedback control the actuator of a receptacle to unload said package into said appropriate sorting outlet.

9. Package sorting installation according to any one of claims 7 to 8, **characterized in that** the sorting installation is equipped with short-range communication antennas (20) distributed along the sorting conveyor, at least one antenna covering a zone for loading packages and one other antenna covering a zone for unloading packages, each antenna being designed to allow communication between the central unit and the on-board electronics in the receptacles in the zone that it covers.

10. Package sorting installation according to any one of claims 7 to 9, **characterized in that** each train comprises a battery (18) designed to supply the on-board equipment of the receptacles of the same train, said battery being electrically charged by dynamo.
